# EUROPEAN PATENT APPLICATION

(11) **EP 1 918 630 A1**
(43) Date of publication of application: **07.05.2008**
(21) Application number: 06123305.2
(22) Date of filing: 01.11.2006
(51) Int. Cl.: F17C 9/02, F17C 5/06

(54) **Method for the regasification of a liquid product such as a liquified natural gas**

(71) Applicant: SHELL INTERNATIONALE RESEARCH MAATSCHAPPIJ B.V., 2596 HR Den Haag (NL)
(72) Inventor: Groothuis, Casper Krijno, 2596 HR The Hague (NL); Kuivenhoven, Andries c/o Shell Brasil Exploration and Production, 22640-102, Rio de Janeiro (BR)
(74) Representative: Zeestraten, Albertus W. J.

(57) **Abstract**

The present invention relates to a method for the regasification of a liquid product, in particular a liquid hydrocarbon product such as liquefied natural gas, the method at least comprising the steps of:
(a) transferring a liquid product from a vessel (2) to an onshore regasification unit (4);
(b) regasifying the liquid product at the onshore regasification unit (4) thereby obtaining regasified liquid product;

wherein in step (a) the liquid product is not temporarily stored in an onshore storage tank.

In a further aspect the present invention provides a regasification system (1) for performing the method.

## Description

The present invention relates to a method for the regasification of a liquid product, in particular a liquid hydrocarbon product such as liquefied natural gas (LNG).

Several methods and apparatuses for the regasification (or "vaporization") of liquid hydrocarbon products such as liquefied natural gas (LNG) are known. It is desirable to liquefy a hydrocarbon product such as natural gas for a number of reasons. As an example, natural gas can be stored and transported over long distances more readily as a liquid than in gaseous form, because it occupies a smaller volume and does not need to be stored at high pressures. After transporting the liquid hydrocarbon product from a remote production to the intended destination it is regasified and sent in gaseous form to the end users via a gas distribution network.

US 2002/0174662 A1 relates to liquefied natural gas regasification. Although US 2002/0174662 relates in particular to offshore LNG regasification (i.e. wherein the regasification takes place in an offshore regasification unit), it also discloses an embodiment
wherein the regasification is performed in a regasification unit located at an onshore terminal. Paragraph [0004] in connection with Figure 1 of US 2002/0174662 A1 explains that an onshore LNG regasification terminal typically consists of a pier or jetty, storage tanks and regasification plants. According to Figure 1 of US 2002/0174662 A1 an LNG ship comes and berths at a pier and offloads its cargo of LNG to onshore storage tanks which keep the gas in the same liquid state as it is transported. The LNG in the onshore storage tank is later regasified at a regasification plant to produce natural gas, which natural gas is transferred to end users via pipelines.

A problem of the conventional onshore regasification method as disclosed in US 2002/0174662 A1 is that, as an onshore storage tank has to be built, a quick implementation of a regasification project may be cumbersome.

A further problem of the known method is that, in particular if the regasification project is intended for only a short period of time, the investment costs for the onshore storage tank may be too high.

It is an object of the present invention to minimize one or more of the above problems.

It is a further object of the present invention to provide an alternative method for the regasification of a liquid product such as LNG that can be implemented relatively quick.

One or more of the above or other objects may be achieved according to the present invention by providing a method for the regasification of a liquid product, in particular a liquid hydrocarbon product such as liquefied natural gas, the method at least comprising the steps of:
(a) transferring a liquid product from a vessel to an onshore regasification unit;
(b) regasifying the liquid product at the onshore regasification unit thereby obtaining regasified liquid product;
wherein in step (a) the liquid product is not temporarily stored in an onshore storage tank.

It has been found that using the surprisingly simple method according to the present invention, the CAPEX and OPEX can be significantly lowered, as no onshore storage tank is required for temporarily storing the liquid product to be regasified.

An important advantage of the present invention is that it can be quickly implemented, i.e. there is relatively little time needed for executing a new regasification project.

A further advantage of the present invention is that, if no regasification is desired anymore at a certain location, the equipment can be readily moved to a new location. Also no onshore storage tank has to be taken down and reconstructed at the new location. The flexible approach of the present invention makes it very suitable for development of new markets, in particular spot markets.

The liquid product to be regasified is not limited to a hydrocarbon-containing product but may be any liquid. The liquid product may be pressurized or at atmospheric pressure. Preferably the liquid product is substantially comprised of components having a boiling point below 0 °C at atmospheric pressure. Suitable examples of the liquid product are nitrogen, CO₂, ammonia, ethane, ethylene, propane, propylene, LPG (liquefied petroleum gas; usually containing a mixture of propane and butane), etc.

Preferably the liquid product is a hydrocarbon-containing product such as LNG. As is customary to the person skilled in the art, the LNG may have various compositions. Usually the LNG stream to be regasified is comprised substantially of methane. The LNG may contain varying amounts of hydrocarbons heavier than methane such as ethane, propane, butanes and pentanes. Depending on the source, the LNG may contain varying (minor) amounts of non-hydrocarbons such as CO₂, H₂S, N₂, etc.

The vessel may be any transport vessel with which the liquid product can be transported over water. To this end, the vessel is usually provided with storage tanks for the liquid product. In case the liquid product is LNG the vessel is preferably an LNG carrier.

The regasification of the liquid product at the onshore regasification unit may be performed in various ways, as is known in the art. As an example, the liquid product may be regasified in a so-called open rack type vaporizer (ORV; usually using seawater), in a submersed combustion vaporizer (SCV) or by any other suitable vaporizer. Examples of vaporizers have been disclosed in W.S. Worthington and B.S. Hubbard, "Improved regasification methods reduce emissions", Hydrocarbon Processing, July 2005, pp. 51-54, which is hereby incorporated by reference.

The person skilled in the art will understand that, in particular in case the liquid product is LNG, before, after or at the same time of the regasification of the liquid product a recovery of one or more of nitrogen, ethane, propane, butanes and higher hydrocarbons such as pentane from the gaseous or liquid product may take place. The recovery of nitrogen or hydrocarbons may be done for several purposes. One purpose may be the production of hydrocarbon streams consisting primarily of hydrocarbons heavier than methane such as natural gas liquids (NGLs; usually composed of ethane, propane and butanes), LPG or condensates (usually composed of butanes and heavier hydrocarbon components). Another purpose may be the adjustment of e.g. the heating value of the hydrocarbon product to correspond to desired gas network specifications.

Alternatively, also for the adjustment of the heating value nitrogen and/or hydrocarbons may be added to the hydrocarbon product.

Further it is preferred that the liquid product is transferred from the vessel to the regasification unit using a pipe, hose or conventional offloading systems. These conventional offloading systems may comprise loading arms with swivels or flexible hoses adapted for pressurized liquid product, optionally at a cold temperature.

If the liquid product is at a cold temperature preferably use is made of a cryogenic pipe, i.e. a pipe that can be used for transferring very cold liquids such as LNG.

The vessel may be berthed to a pier or jetty whilst offloading the liquid product. According to a preferred embodiment of the present invention, the vessel is not berthed but, at least during the transferring in step (a), at a pre-selected distance from the shore. This may be achieved in such a way that during the transferring in step (a) the vessel is controlled by a dynamic positioner. A dynamic positioner is known as such in the art and may be in the form of tugboats or thrusters. An example of a suitable dynamic positioner is the coupling unit as shown in WO 2004/097285, the teaching of which is hereby incorporated by reference.

After the regasification of the regasified liquid product it will usually be sent to end users by means of a gas network. Instead, the regasified liquid may be directly sent to an end user such as a power plant, without using a gas network.

According to an especially preferred embodiment of the present invention, the vessel is provided with liquid product that has been transported by a further vessel, before transferring the liquid product from the vessel to the onshore regasification unit. Herewith, the vessel can function as a FSU (Floating Storage Unit) that may be located, moored or anchored at a pre-selected location near shore or in a port.

In a further aspect the present invention provides a regasification system for the regasification of a liquid product, in particular a liquid hydrocarbon product such as liquefied natural gas, the system at least comprising:
- a vessel intended for carrying a liquid product;
- an onshore regasification unit for regasifying the liquid product carried on the vessel;
wherein the regasification system does not comprise an onshore storage tank for temporarily storing the liquid product that is to be regasified in the onshore regasification unit.

Further it is preferred that the regasification system further comprises a cryogenic pipe between the vessel and the onshore regasification unit.

Further it is preferred that an outlet of the regasification unit is connected to a gas network.

Also it is preferred that the regasification system further comprises a further vessel for transporting the liquid product to the vessel, before transferring the liquid product from the vessel to the onshore regasification unit.

Hereinafter the invention will be further illustrated by the following non-limiting drawing. Herein shows:
Fig. 1 schematically a process scheme in accordance with the present invention; and
Fig. 2 schematically a further embodiment of a process scheme in accordance with the present invention.

For the purpose of this description, a single reference number will be assigned to a line as well as a stream carried in that line. Same reference numbers refer to similar components.

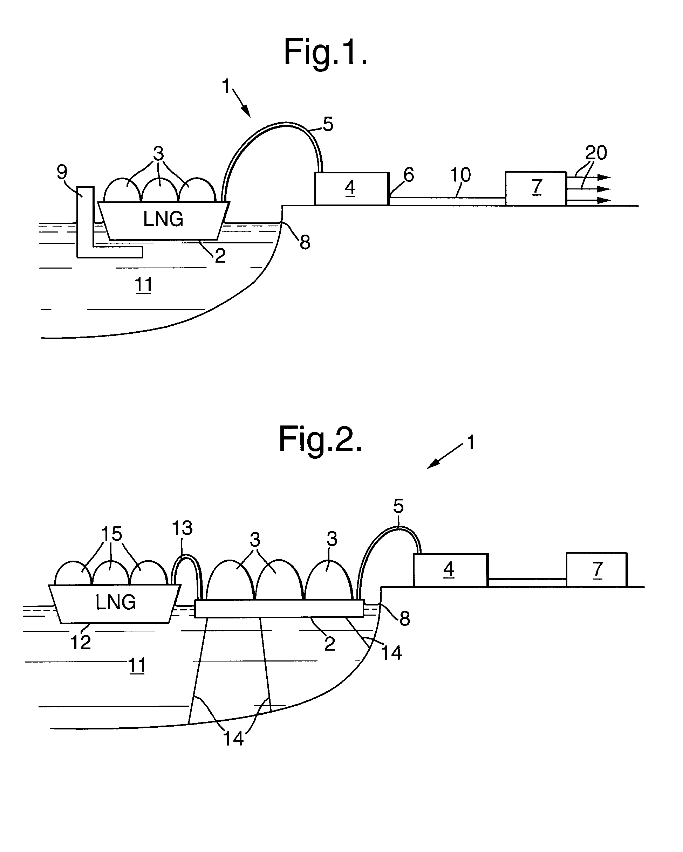

Figure 1 schematically shows a regasification system (generally indicated with reference no. 1) for the regasification of a liquid product such as LNG.

The regasification system 1 of Figure 1 comprises an LNG carrier vessel 2 intended for carrying LNG. To this end the vessel 2 contains one or more storage tanks 3 specifically designed for the storage of cold liquids such as LNG. During offloading, the vessel 2 may be moored against a pier or jetty or the like (not shown). In the embodiment of Figure 1, the vessel 2 is not moored against a pier or jetty but is kept at a pre-selected distance from the shore or coast 8 (which may be in a port). To maintain the pre-selected distance to the shore 8 (and to avoid the need of mooring), the vessel 2 may be controlled by a dynamic positioner 9 such as a thrusters or tugboats. Instead, the vessel 2 may be anchored at a certain location, not necessarily at the same time moored against a pier or jetty or the like.

Further the regasification system 1 comprises an onshore regasification unit 4 (e.g. at an LNG import terminal) for regasifying the LNG stored in the storage tanks 3 on the vessel 2. By means of the regasification unit 4, regasified LNG 10 is obtained. The regasification unit 4 may comprise any kind of vaporizer, such as an submersed combustion vaporizer (SCV). The regasification unit 4 may be mounted on a skid (not shown), if desired. Also, the regasification unit 4 may be placed on an onshore mobile carrier (not shown) to move it from a first location to a second location (e.g. from one LNG carrier to be offloaded to another).

The vessel 2 can be directly connected to the onshore regasification unit 4, i.e. during offloading of the LNG from the storage tanks 3 on the vessel 2, the LNG can be directly transferred to the regasification unit 4.

In the embodiment of Figure 1, the regasification system 1 does not comprise an onshore storage tank for temporarily storing the LNG shore. According to Figure 1 a cryogenic pipe 5 is used for transferring the LNG between the vessel 2 and the onshore regasification unit 4. The cryogenic pipe 5 may form part of the vessel 2 or the regasification unit 4.

As further shown in Figure 1, an outlet 6 of the regasification unit 4 is connected to a gas network 7 to send regasified LNG 20 to the end users.

The person skilled in the art will readily understand that further elements may be present if desired.

Figure 2 shows schematically a further embodiment of a process scheme in accordance with the present invention. In the embodiment of Figure 2, the vessel 2 is in the form of a FSU (floating storage unit) that is anchored on a position near the regasification unit 4, by means of anchoring lines 14. Alternatively, the vessel 2 may be moored against a pier or jetty (not shown).

The system 1 further comprises a further vessel 12 for transporting the LNG from a remote location to the vessel 2, before transferring the LNG from the vessel 2 to the onshore regasification unit 4. For offloading the LNG from the storage tanks 15 on the further vessel 12 to the tanks 3 on the vessel 2, conventional offloading equipment 13 may be used. In case of LNG as the liquid product to be regasified, preferably use is made of cryogenic pipes. Alternatively, hoses or conventional offloading systems may be used.

In the embodiment of Figure 2 the storage tanks 3 on the vessel 2 function as intermediate offshore storage tanks for the LNG that is eventually to be regasified in the onshore regasification unit 4.

The person skilled in the art will readily understand that many modifications may be made without departing from the scope of the invention.

## Claims

1. Method for the regasification of a liquid product, in particular a liquid hydrocarbon product such as liquefied natural gas, the method at least comprising the steps of:
(a) transferring a liquid product from a vessel (2) to an onshore regasification unit (4);
(b) regasifying the liquid product at the onshore regasification unit (4) thereby obtaining regasified liquid product;
wherein in step (a) the liquid product is not temporarily stored in an onshore storage tank.

2. Method according to claim 1, wherein the liquid product is transferred from the vessel (2) to the regasification unit (4) using a cryogenic pipe (5).

3. Method according to claim 1 or 2, wherein during the transferring in step (a) the vessel (2) is at a pre-selected distance from shore (8).

4. Method according to claim 3, wherein during the transferring in step (a) the vessel (2) is controlled by a dynamic positioner (9).

5. Method according to one or more of the preceding claims, wherein the regasified liquid product is sent to a gas network (7).

6. Method according to one or more of the preceding claims, wherein the vessel (2) is provided with liquid product that has been transported by a further vessel (12), before transferring the liquid product from the vessel (2) to the onshore regasification unit (4).

7. Regasification system (1) for the regasification of a liquid product, in particular a liquid hydrocarbon product such as liquefied natural gas, the system (1) at least comprising:
- a vessel (2) intended for carrying a liquid product;
- an onshore regasification unit (4) for regasifying the liquid product carried on the vessel (2);
wherein the regasification system (1) does not comprise an onshore storage tank for temporarily storing the liquid product that is to be regasified in the onshore regasification unit (4).

8. Regasification system (1) according to claim 7, further comprising a cryogenic pipe (5) between the vessel (2) and the onshore regasification unit (4).

9. Regasification system (1) according to claim 7 or 8,
wherein an outlet (6) of the regasification unit (4) is connected to a gas network (7).

10. Regasification system (1) according to one or more of the preceding claims 7-9, further comprising a further vessel (12) for transporting the liquid product to the vessel (2), before transferring the liquid product from the vessel (2) to the onshore regasification unit (4).
